# EUROPEAN PATENT SPECIFICATION

(11) **EP 1 390 607 B1**
(45) Date of publication and mention of the grant of the patent: **04.07.2007**
(21) Application number: 02745170.7
(22) Date of filing: 24.05.2002
(51) Int. Cl.: F01M 1/02, F01M 1/08, F01M 1/16, F01M 3/04

(54) **CENTRAL LUBRICATING UNIT**
MITTLERE SCHMIERUNGSEINHEIT
UNITE DE LUBRIFICATION CENTRALE

(30) Priority: 25.05.2001 DK 200100841
(43) Date of publication of application: 25.02.2004
(73) Proprietor: Hans Jensen Lubricators A/S, 9560 Hadsund (DK)
(72) Inventor: ERIKSEN, Leif, DK-9560 Hadsund (DK)
(74) Representative: Nielsen, Leif
(86) International application number: PCT/DK2002/000356
(87) International publication number: WO 2002/095196

(56) References cited:
- WO-A1-96/09492
- DE-A1- 3 637 031
- DE-A1- 3 909 772

## Description

### Background of the Invention

The present invention concerns a central lubricating apparatus for lubricating engine cylinders in large diesel engines, particularly marine engines, by oil injection and made with pressurized atomising nozzles and a compact pump unit connected with said nozzles and comprising a row of piston pumps driven by a common rotating shaft which is provided with driving tappets interacting with thrust pads for respective axially displaceable spring-loaded pistons in the row of piston pumps, wherein the shaft is supported along its length by one or more bearing liners disposed diametrically opposite to the axially displaceable pistons.

These lubricating apparatuses are traditionally made as compact pump units which are mounted in close connection to their respective cylinders, and which are pipe connected to a feed reservoir of lubricating oil and to plural oil injection nozzles on different parts of the cylinder wall. Each unit has a row of piston pumps operating the different lubricating points, being driven by a common rotating shaft with tappets fitted thereon, which by the rotation of the shaft in a housing for the apparatus interact with thrust pads on respective axially displaceable pistons which are spring-loaded in direction towards the shaft so that the pistons will perform reciprocating movements by rotation of the shaft for activating respective piston pumps of which the pistons form apart.

In principle, these lubricating apparatuses have operated impeccably according to the same principle for many years where they have operated under the condition that the discharge pressure from the piston pumps was not required to be very large, as it is a permanent rule that the oil is to be injected into the cylinder during the upward return stroke of the engine piston, i.e. during the compression movement, though before the subsequent working stroke at the ignited combustion. Hereby, it has been of immediate interest to work with injection or pump pressures of the magnitude 10 bar.

Within later years, cf. WO 00/28194, it has been proposed to make the lubrication efficient by injecting the oil through pressurised atomising nozzles for achieving oil mist lubrication, and even if this may occur continuously during the upward movement of the piston, the oil has to be supplied at a far higher pressure for ensuring fine atomisation through ordinary, simple atomising nozzles, e.g. a pressure up to 100 bar or more. This is far more than the ability of prior art lubricating apparatus constructions, and therefore entirely new pump constructions have been considered.

From WO 96/09492 and DE-A-36 37031 a prior art lubricating apparatus of the type described in the introduction is known. This prior art does not explicit describe bearings; however such features are implicit for supporting a rotating shaft. The documents are no indication of the fastening of bearings in a specific way.

However, by the invention it has surprisingly appeared that it is actually possible to make use of prior art constructions when these are modified on at least one of two essential points, namely partly by a sliding, fixed support of the said shaft against the rear wall of the housing of the apparatus, and partly by making the said drive tappets and their interacting part in a hardened version. On a more detailed level is added that it is also required to make the shaft somewhat stronger than hitherto fore and to fasten the tappets even better to the shaft.

According to the invention, the central lubricating apparatus is peculiar in that the drive tappets and the interacting thrust pads are made at least with hardened surfaces, and that the bearing liners are mounted on a rear wall in the pump unit by using a bolt enabling adjustment of the position of the bearing liner.

Hereby it has been realised that on the other hand it is possible to maintain the lubricating apparatuses largely in their present embodiment, which of course will be an appreciable advantage. The provision of direct support of a stronger dimensioned shaft will ensure the necessary transmission of a well-defined high pressure for the piston pumps, and the hardened engaging parts will ensure good wear resistance of their interacting wearing surfaces.

Concerning the wear resistance it is to be mentioned that by the prior art lubricating apparatuses, an appreciable wear on the actuating tappets and the pistons interacting therewith or thrust pads for these has been accepted, since this only has resulted in a small change in the oil volume discharged per pump stroke. The situation is different with regard to the invention because here it is an essential function to dose the oil below the required high atomising pressure, whereas not atomised oil will be utilised very inefficiently.

By experiments it has been ascertained that even a moderate wear on the said parts during high pressure operation has decisive negative influence on the quality of the atomisation of the oil, and by use of an unchanged pump concept reasons have been found for noting that the operational front and rear edges on the actuating tappets are particularly subjected to the strongest wear action. This implies that the tappets initiate and terminate the piston movements with continuously more damped movements, thereby influencing the time during which the oil at the nozzles are under sufficient pressure for efficient atomisation of the oil.

By the invention it is therefore particularly important to make the said tappet edges extra wear resisting; this is found sufficiently achievable already at the said general use of hardened steel, but it will be within the scope of the invention to arrange other forms of special reinforcing of just the tappet areas concerned.

On this background, by the invention it will even be a possibility that already existing lubricating apparatuses can be modified to the desired high pressure operation in a relatively simple way without any basic restructuring.

### Description of the Drawing

The invention is explained in more detail below with reference to the drawing on which:
- Fig. 1: is a sectional view of a conventional lubricating apparatus of relevant kind,
- Fig. 2: is a longitudinal section thereof,
- Fig. 3: is a view of a lubricating apparatus according to the invention corresponding to Fig. 1, and
- Fig. 4: is a partial view of a tappet arrangement in the apparatus according to the invention.

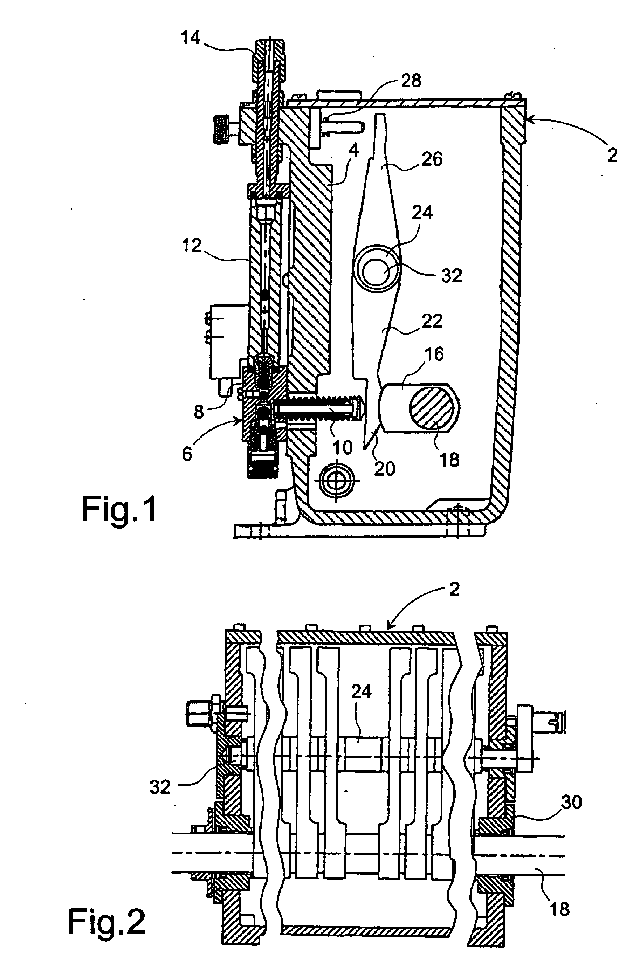

The apparatus shown in Figs. 1 and 2 has a box-shaped housing 2, which at a front wall 4 carries a row of piston pump units 6, of which only one is shown in Fig. 1. The unit has a valve housing 8 with a lower inlet for lubricating oil, an intermediate section for accommodating a piston 10 projecting into the housing 2, and an upper outlet for the piston pump thus formed. Via a flow indicator 12, the outlet is connected to an upper connecting stub 14, and from the entire row of these stubs connecting pipes extend to the lubricating points on the associated engine cylinder, e.g. in a number of 6 - 24.

The pistons 10 are operated for impression by means of actuating tappets 16 on a through-going control shaft 18 which is rotated synchronously with the cam shaft of the engine. The pistons are not actuated directly but via thrust pads 20 on respective rocker arms 22, which are pivoting about a fixed axle 24 and have upwardly projecting extensions 26 interacting at the top with respective set screws 28 projecting inwardly from the front wall. The pistons 10 are spring-loaded in direction inwards against the thrust pads 20 which they will thus keep pressed inwards until respective upper arm ends abut on the set screws 28. Hereby, for each pump unit the initial position will be determined from which each of the thrust pads 20 will be pressed outwards at the passage of the associated actuating tappet 16. In operation, in the shown situation there will be a certain distance between the arm part 26 and the set screw 28, so that the thrust pad 20 during the tappet passage will be pressed outwards for operating the piston 10 and will go back to the said initial position after this passage under the action of the spring force of the piston. The set screws can hereby be operated for determining individual operational strokes of the pistons and thereby the associated performances of the individual pump units.

Above is indicated that the actuating tappets 16 are drawing special attention in connection with the invention, and therefore it is to be mentioned the tappets are conventionally made just as shown in Fig. 1, namely as pieces of flat bars which close to one end are formed with a bored hole for mounting on the control shaft 18. After boring the hole, the hole edge is reamed and subsequently finished for careful adapting to the shaft whereby the tappet body is fastened in a simple way by means of a pin. As shown in Fig. 2, the control shaft 18 is suspended in bearing casings 30 in the end walls of the housing 2, whereas the fixed axle 24 is suspended in the same walls by means of eccentrically disposed end pins 32, enabling a certain displacing of the axle 24 with the intention of desirable adjustments which, however, are not particularly relevant for the invention.

As already mentioned, by the invention one is confronted with the problem that a far greater pump pressure is required than hitherto common, and that the conventional pumps in view have appeared to be unsuited for this purpose. In connection with the invention many considerations have been made concerning more suited constructions until, surprisingly, it has been found that the conventional basic construction really will be usable by a combination of relatively simple modifications, namely optimally as follows:
a) The control shaft 18 is made with a slightly increased diameter in adapted bearing housings 30 so that the twist of the shaft under increased load may be kept at an acceptable level.
b) Both the actuating tappets 16 and the rocker arms 22,20 are made in a hardened version for increasing their wear resistance.
c) The control shaft 18 is stabilised in its transverse direction by arranging a stationary rear support for this shaft 18 in one or some of the interspaces between the tappets 16 with press connection to the rear wall of the housing; and
d) The actuating tappets 16 are fastened in a modified way to the shaft 18.

Re a): This is based on a choice of the skilled in the art, which will be adjusted to the prevailing conditions, i.e. special dimensioning prerequisites are difficult to make here. However, for a slight adaptation it may be essential that, in spite of an increased diameter, the shaft 18 may still be accommodated in bearing housings 30 with unchanged outer diameter so that the housing construction does not necessarily have to be changed.

Re b): The changed pressure conditions result in far stronger mechanical actions in the pump system, however, by the invention it has been found that this system can be kept largely unchanged when the parts discussed here are made in a hardened version as a combination feature in connection with the other modifications. The highly increased wear action will only occur between the actuating tappets and the rocker arms, and surprisingly it has been found that the conventional construction may very well be maintained if only hardened wear parts are used.

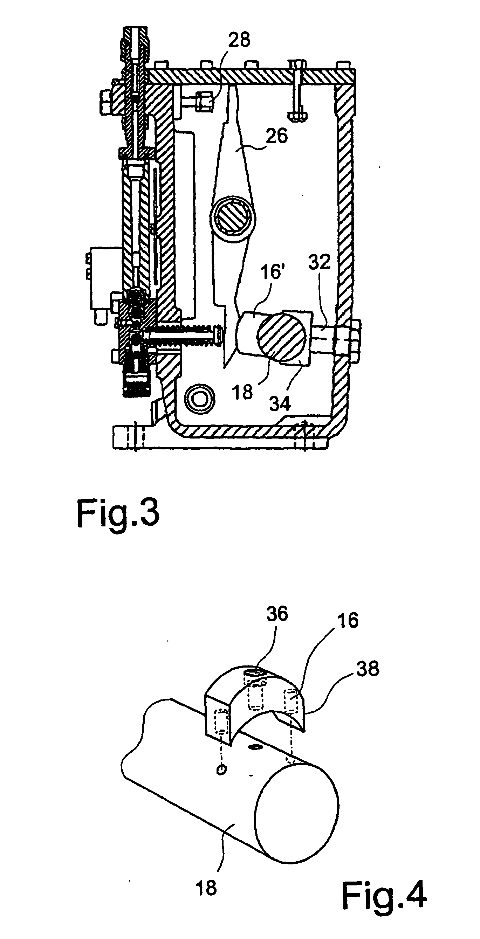

Re c): Increasing the diameter of the control shaft 18, cf. point a), is essential for counteracting twist of the shaft above an acceptable level, but another essential parameter is the bending stiffness of the shaft, as the operational stroke of the piston pumps will be much influenced directly by the control shaft itself yielding outwards under the strong counter pressure exerted by the pistons via the rocker arms and the actuating tappets. A shaft stiffness needed therefore would require a considerably increased shaft diameter, not to say a completely different apparatus construction, but here it is found fully acceptable that the conventional system is maintained, namely when, as shown in Fig. 3, a suitable number of rear supports are added for sliding support of the shaft towards the rear wall of the housing. In the shown example, we are speaking of short support rods or bolts 32, which abut on the shaft 18 with a bearing liner 34. In smaller apparatuses it may be sufficient to dispose a single such rear support at the centre of the shaft, but otherwise several such may very well be provided.

Re d): The already mentioned, known way of fastening the actuating tappets is unsuitable for use in connection with hardened tappets but it has been found quite safe to use another, in some ways simpler, arrangement, namely as shown in Fig. 4: The tappets 16 are made with a peripheral dimension which is slightly less than the thickness of the shaft 18, and they are made with a bolt hole 36 at the centre and a couple of pinholes 38 close to the sides, possibly a little mutually staggered in the longitudinal direction of the shaft. Corresponding holes are bored into the shaft, and then a very good attachment of the tappet may be achieved by inserting pins in the holes 38 and by countersunk screwing of a bolt into the hole 36. However, possibly two or more screws may be used instead.

The invention will primarily comprise the simultaneous use of the indicated modifications, but there may be border cases where e.g. three of the modifications may be sufficient.

As a possible alternative to the said fastening of the tappets 16 there may be used a basic item which is profiled as tappets and shaft together. The run surfaces for the said supports and for the bearing surfaces in the bearing housings 30 and the shaft ends may then be formed by turning into cylindrical shape.

## Claims

1. A central lubricating apparatus for lubricating engine cylinders in large diesel engines, particularly marine engines, by oil injection and made with pressurized atomising nozzles and a compact pump unit connected with said nozzles and comprising a row of piston pumps driven by a common rotating shaft which is provided with driving tappets interacting with thrust pads for respective axially displaceable spring-loaded pistons in the row of piston pumps, wherein the shaft is supported along its length by one or more bearing liners disposed diametrically opposite to the axially displaceable pistons, **characterised in that** the drive tappets and the interacting thrust pads are made at least with hardened surfaces, and that the bearing liners are mounted on a rear wall in the pump unit by using a bolt enabling adjustment of the position of the bearing liner.

2. A central lubricating apparatus according to claim 1, **characterised in that** the drive tappets actuate the pistons via thrust pads on respective rocker arms which are pivotable about a fixed axle in the pump unit.

3. A central lubricating apparatus according to claim 2, **characterised in that** each rocker arm has an extension extending at the opposite side of the fixed axle in relation to the thrust pad and which interacts with a respective set screw.

4. A central lubricating apparatus according to any preceding claim, **characterised in that that** the drive tappets and the thrust pads are made of hardened steel.

5. A central lubricating apparatus according to any of claims 1 - 3, **characterised in that** the drive tappets and the thrust pads are made of surface hardened steel.

6. A central lubricating apparatus according to any preceding claim, **characterised in that** the operational front and rear edges of the drive tappets are particularly hardened, e.g. by special hardening of the surface in these areas.

7. A central lubricating apparatus according to any preceding claim, **characterised in that** the drive tappets and the shaft are made as one suitably profiled item in which shaft ends and bearing surfaces are formed by turning into cylindrical shape.

8. A central lubricating apparatus according to any of claims 1 - 6, **characterised in that** the drive tappets are separate elements, which are connected with the shaft by means of dowel pins mounted in pin holes in the shaft and the tappets, and which are fastened to the shaft by means of one or more screws.

9. A central lubricating apparatus according to claim 8, **characterised in that** the dowel pins are provided in the areas at the sides of the tappet and are arranged staggered in the longitudinal direction of the shaft.

## Patentansprüche

1. Zentrale Schmiervorrichtung zum Schmieren von Motorzylindern für große Dieselmotoren, insbesondere Schiffsmotoren, durch Öleinspritzung, die aus mit Druck beaufschlagten Zerstäubungsdüsen und aus einer kompakten Pumpeinheit gebildet ist, die mit den Düsen verbunden ist und eine Reihe von Kolbenpumpen umfasst, die durch eine gemeinsame sich drehende Welle angetrieben werden, die mit Antriebsstößeln versehen ist, die mit Schubflächen für jeweilige axial bewegbare, federbelastete Kolben in der Reihe von Kolbenpumpen in Wechselwirkung stehen, wobei die Welle auf ihrer Länge durch eine oder mehrere Lagergleitflächen gelagert ist, die diametral entgegengesetzt zu den axial bewegbaren Kolben angeordnet sind, **dadurch gekennzeichnet, dass** die Antriebsstößel und die damit in Wechselwirkung stehenden Schubflächen wenigstens mit gehärteten Oberflächen gebildet sind und dass die Lagergleitflächen an einer Rückwand in der Pumpeneinheit unter Verwendung eines Bolzens montiert sind, der die Einstellung der Position der Lagergleitfläche ermöglicht.

2. Zentrale Schmiervorrichtung nach Anspruch 1, **dadurch gekennzeichnet, dass** die Antriebsstößel die Kolben über Schubflächen an entsprechenden Kipphebelarmen, die um eine feste Achse in der Pumpeinheit schwenkbar sind, betätigen.

3. Zentrale Schmiervorrichtung nach Anspruch 2, **dadurch gekennzeichnet, dass** jeder Kipphebelarm eine Verlängerung besitzt, die sich auf der gegenüberliegenden Seite der festen Achse in Bezug auf die Schubfläche erstreckt und mit einer entsprechenden Stellschraube in Wechselwirkung steht.

4. Zentrale Schmiervorrichtung nach einem vorhergehenden Anspruch, **dadurch gekennzeichnet, dass** die Antriebsstößel und die Schubflächen aus gehärtetem Stahl hergestellt sind.

5. Zentrale Schmiervorrichtung nach einem der Ansprüche 1-3, **dadurch gekennzeichnet, dass** die AntriebsstöBel und die Schubflächen aus einem o-berflächengehärteten Stahl hergestellt sind.

6. Zentrale Schmiervorrichtung nach einem vorhergehenden Anspruch, **dadurch gekennzeichnet, dass** die vordere und die hintere Wirkkante der Antriebsstößel besonders gehärtet sind, beispielsweise durch spezielles Härten der Oberflächen dieser Bereiche.

7. Zentrale Schmiervorrichtung nach einem vorhergehenden Anspruch, **dadurch gekennzeichnet, dass** die Antriebsstößel und die Welle als ein einziges geeignet profiliertes Element ausgebildet sind, in dem die Wellenenden und die Lageroberflächen durch Drehbearbeitung in eine zylindrische Gestalt geformt sind.

8. Zentrale Schmiervorrichtung nach einem der Ansprüche 1-6, **dadurch gekennzeichnet, dass** die Antriebsstößel getrennte Elemente sind, die mit der Welle mittels Dübelstiften verbunden sind, die in Stiftlöchern in der Welle und in den Stößeln angebracht sind, und die an der Welle mittels einer oder mehrerer Schrauben befestigt sind.

9. Zentrale Schmiervorrichtung nach Anspruch 8, **dadurch gekennzeichnet, dass** die Dübelstifte in den Bereichen auf den Seiten des Stößels vorgesehen und in der Längsrichtung der Welle versetzt angeordnet sind.

## Revendications

1. Dispositif de lubrification central pour lubrifier des cylindres de moteur dans des moteurs diesels de grandes dimensions, en particulier des moteurs de marine, par injection d'huile, et composé de buses d'atomisation sous pression ainsi que d'une unité de pompage compacte reliée aux dites buses, et comprenant une rangée de pompes à piston entraînée par un arbre rotatif commun qui est pourvu de poussoirs agissant avec des plateaux de poussée pour des pistons respectifs chargés par ressort déplaçables axialement dans la rangée de pompes à piston, dans lequel l'arbre est supporté dans le sens de sa longueur par un ou plusieurs coussinets de paliers qui sont disposés diamétralement à l'opposé des pistons déplaçables axialement, **caractérisé en ce que** les poussoirs et les plateaux de poussée qui agissent les uns avec les autres sont faits au moins avec des surfaces trempées, et **en ce que** les coussinets de paliers sont montés sur une paroi arrière de l'unité de pompage en utilisant un boulon qui permet un ajustement de la position du coussinet de palier.

2. Dispositif de lubrification central selon la revendication 1, **caractérisé en ce que** les poussoirs actionnent les pistons par le biais de plateaux de poussée sur des culbuteurs respectifs qui peuvent pivoter autour d'un axe fixe à l'intérieur de l'unité de pompage.

3. Dispositif de lubrification central selon la revendication 2, **caractérisé en ce que** chaque culbuteur comprend une extension qui s'étend au niveau du côté opposé de l'axe fixe en relation avec le plateau de poussée et qui agit avec une vis de réglage respective.

4. Dispositif de lubrification central selon l'une quelconque des revendications précédentes, **caractérisé en ce que** les poussoirs et les plateaux de poussée sont faits en acier trempé.

5. Dispositif de lubrification central selon l'une quelconque des revendications 1 à 3, **caractérisé en ce que** les poussoirs et les plateaux de poussée sont faits en acier trempé en surface.

6. Dispositif de lubrification central selon l'une quelconque des revendications précédentes, **caractérisé en ce que** les bords opérationnels avant et arrière des poussoirs sont particulièrement trempés, par exemple par durcissement spécial de la surface dans ces zones.

7. Dispositif de lubrification central selon l'une quelconque des revendications précédentes, **caractérisé en ce que** les poussoirs et l'arbre sont réalisés en tant qu'un élément unique profilé de façon appropriée, dans lequel des extrémités de l'arbre et des surfaces de portée sont formées en réalisant une forme cylindrique.

8. Dispositif de lubrification central selon l'une quelconque des revendications 1 à 6, **caractérisé en ce que** les poussoirs sont des éléments séparés qui sont reliés à l'arbre au moyen de goupilles de positionnement qui sont montées dans des trous de goupilles de positionnement dans l'arbre et les poussoirs et qui sont fixées sur l'arbre au moyen d'une ou de plusieurs vis.

9. Dispositif de lubrification central selon la revendication 8, **caractérisé en ce que** les goupilles de positionnement sont prévues dans les zones situées au niveau des côtés du poussoir, et sont arrangées décalées dans la direction longitudinale de l'arbre.
